# EUROPEAN PATENT APPLICATION

(11) **EP 4 183 557 A1**
(43) Date of publication of application: **24.05.2023**
(21) Application number: 22847246.0
(22) Date of filing: 18.08.2022
(51) Int. Cl.: B29C 64/255

(54) **MATERIAL CONTAINER DEVICE FOR 3D PRINTER, AND 3D PRINTER**

(30) Priority: 19.08.2021 CN 202121959874 U
(71) Applicant: Shenzhen Anycubic Technology Co., Ltd., Shenzhen, 518115 (CN)
(72) Inventor: The designation of the inventor has not yet been filed
(74) Representative: Bird & Bird LLP
(86) International application number: PCT/CN2022/113355
(87) International publication number: WO 2023/020581

(57) **Abstract**

The present invention discloses a resin vat device for a 3D printer and a 3D printer, in general, the clipping plate is arranged at an edge of a bottom surface of a resin vat device, and the clipping plate is nested and fitted in the boss of a printer, allowing the resin vat device to be fixed quickly and accurately. , and the resin vat device is fixed not only depending on bolts, such that the position is more stable and is not prone to displacement due to vibrations during printing. The present invention provide main technical solutions as follows: a resin vat device for a 3D printer, including: a resin vat frame (1) and a release film assembly (2), the release film assembly (2) including a release film (21); where the release film assembly (2) covers an opening on a first side of the resin vat frame (1), and the resin vat device further includes a clipping plate (3), one end of the clipping plate (3) is fixed, and the other end thereof is located at the opening on the first side and protrudes from the release film (21). The present disclosure is mainly applied for containing liquid resin.

## Description

### TECHNICAL FIELD

The present disclosure relates to a technical field of 3D printing, in particular to a 3D printer and a resin vat device for the 3D printer.

### BACKGROUND

Liquid materials are used in a photocuring 3D printer for 3D printing following principles: taking advantage of a characteristic of photosensitive resin in a fluid state undergoing polymerization reaction under light, a light source irradiating according to the shape of a cross section of an object to be formed to cause the resin in the fluid state to be cured and formed. In light bottom-projection technology, a resin vat filled with resin is placed on a light source of the printer, the light source is at the bottom of the resin vat, and the curing reaction occurs at the bottom of the resin vat. After curing of one layer is finished, the cured printed model is drawn up and separated from the bottom of the resin vat, and then a next layer of the model continues to be printed, such that three-dimensional printing is implemented by superposition layer by layer.

Before each printing, it is necessary to pour enough resin into the resin vat. In order to avoid contamination of the printer, generally, the resin is first poured into the resin vat, and then the resin vat containing the resin is placed on the light source (LED screen) of the printer, the placement of the resin vat is very important to the accuracy of 3D printing. However, the existing LED screen is at the same level as or slightly lower than an upper surface of a base of the printer, it is difficult to quickly and accurately place the resin vat containing the resin in place, and when fixing parts for the resin vat are aging and deform, the position of the resin vat will deviate significantly, and the resin vat may be prone to displacement due to vibrations during printing.

### SUMMARY

In view of this, an embodiment of the present disclosure provides a 3D printer and a resin vat device for the 3D printer, in general, the clipping plate is arranged at an edge of the bottom surface of the resin vat device, and the clipping plate is nested and fitted in the boss of the printer, allowing the resin vat device to be fixed quickly and accurately, and the resin vat device is fixed not only depending on bolts, such that the position is more stable and is not prone to displacement due to vibrations during printing.

To achieve the above objective, the present disclosure provides a technical solution as follows:

According to an aspect, an embodiment of the present disclosure provides a resin vat device for a 3D printer, including: a resin vat frame 1 and a release film assembly 2.

The release film assembly 2 includes a release film 21;

The release film assembly 2 covers an opening on a first side of the resin vat frame 1, and the resin vat device further includes a clipping plate 3. The clipping plate 3 has one end fixed and the other end located at the opening on the first side and protruding from the release film 21.

Further, the clipping plate 3 is an annular clipping plate 3 arranged along an outer periphery of the edge of the opening on the first side; or the clipping plate 3 is an annular clipping plate 3 arranged along an outer periphery of an outer side of the release film assembly 2.

Further, the clipping plate 3 includes at least two sub clipping plates 31, and the at least two sub clipping plates 31 are respectively arranged in different directions of the edge of the opening on the first side, and either of the sub clipping plates 31 includes a plurality of sub-plates that are uniformly distributed.

Further, the release film assembly 2 further includes a support frame 22 laid around the periphery of the edge of the release film 21, and an annular protrusion 4 is laid around the inner periphery of the edge of the opening on the first side, the protruding height of the annular protrusion 4 is lower than the height of the clipping plate 3, the release film assembly 2 is fixed on the edge of the opening on the first side by means of the support frame 22, and the support frame 22 is embedded in a gap between the clipping plate 3 and the annular protrusion 4, and the annular protrusion 4 abuts against the release film 21.

Further, the support frame 22 is connected to the edge of the opening on the first side by means of a plurality of locking bolts 5, and an elastic washer 6 is further provided between the support frame 22 and the edge of the opening on the first side, the elastic washer 6 is configured to deform under the locking actions of the plurality of locking bolts 5, so that the support frame 22 gets closer to the edge of the opening on the first side and then the release film 21 is tensioned.

Further, the support frame 22 is provided with bolt marks for indicating the number or installation sequence of the plurality of locking bolts 5.

Further, the elastic washer 6 includes a cotton washer 61 and a steel ring 62. The cotton washer 61, the steel ring 62 and the support frame 22 are stacked in sequence.

According to an aspect, an embodiment of the present disclosure further provides a 3D printer, including the resin vat device according to any one of the foregoing embodiments.

Further, a base of the 3D printer is provided with a boss 7 for placing the resin vat device thereon, and the clipping plate 3 is configured to be nested in an outer periphery of the boss 7 when the resin vat device is placed on the boss 7.

Further, a light source screen 8 is provided on the boss 7, and an upper surface of the light source screen 8 is higher than an upper surface of the boss 7.

In the resin vat device for a 3D printer and a 3D printer proposed by the embodiments of the present disclosure, in general, the clipping plate is arranged at an edge of the bottom surface of the resin vat device, and the clipping plate is nested and fitted in the boss of the printer, allowing the resin vat device to be fixed quickly and accurately, and the resin vat device is fixed not only depending on bolts, such that the position is more stable and is not prone to displacement due to vibrations during printing. In the prior art, the existing LED screen is at the same level as or slightly lower than an upper surface of a base of the printer, it is difficult to quickly and accurately place the resin vat containing the resin in place, and when fixing parts for the resin vat are aging and deform, the position of the resin vat will deviate significantly. Compared with the prior art, in this application document, by means of provision of the clipping plate protruding from the release film at the bottom surface of the resin vat, when the resin vat is placed on the boss of the printer, the release film is attached to the light source screen on the boss, and the clipping plate can be nested in an outer periphery of the boss due to protruding from the release film to achieve fast and accurate positioning of the resin vat, and due to the limit effect provided by the nesting, the resin vat has a good stability and will not be loosened due to bolt connection or engagement connection during printing.

### BRIEF DESCRIPTION OF THE DRAWINGS

FIG. 1 is a cross-sectional view of a resin vat device for a 3D printer according to an embodiment of the present disclosure;
FIG. 2 is a schematic structural diagram of the resin vat device for a 3D printer according to an embodiment of the present disclosure from a first perspective;
FIG. 3 is a schematic structural diagram of the resin vat device for a 3D printer according to an embodiment of the present disclosure from a second perspective;
FIG. 4 is a schematic structural diagram of another resin vat device for a 3D printer according to an embodiment of the present disclosure from a first perspective; and
FIG. 5 is an exploded structural view of the resin vat device for a 3D printer and a schematic structural diagram of a 3D printer according to an embodiment of the present disclosure.

### DETAILED DESCRIPTION OF THE EMBODIMENTS

In order to further set forth the technical means and effects provided by the present disclosure to achieve the intended purpose of the present disclosure, specific embodiments, structures, features, functions and effects of a resin vat device for a 3D printer and a 3D printer according to the present disclosure are described below with respect to the accompanying drawings and preferred embodiments in detail as follows.

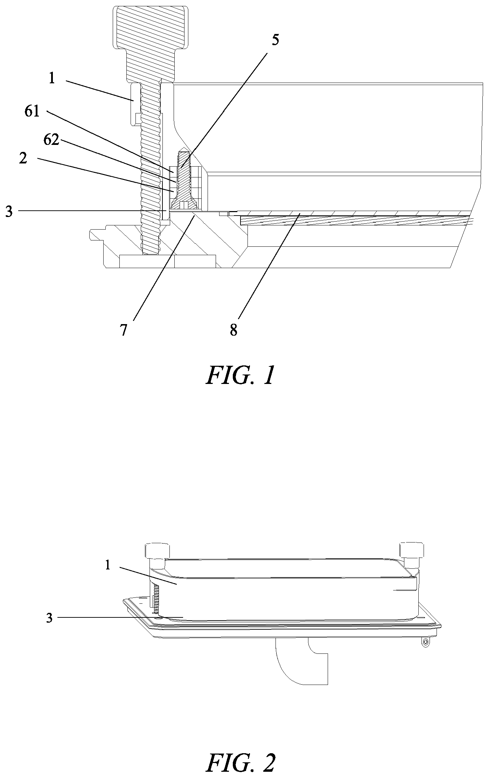

In one aspect, as shown in FIGS. 1 - 5, an embodiment of the present disclosure provides a resin vat device for a 3D printer, the resin vat device including: a resin vat frame 1 and a release film assembly 2.

The release film assembly 2 includes a release film 21.

The release film assembly 2 covers an opening on a first side of the resin vat frame 1, and the resin vat device further includes a clipping plate 3. The clipping plate 3 has one end fixed and the other end located at the opening on the first side and protruding from the release film 21.

The resin vat frame 1 can have various shapes, such as a frame with a circular opening, a rectangular opening, or an opening whose shape changes gradually in an axial direction. In the embodiment, the resin vat frame 1 is a rectangular barrel frame with a height and an axial opening of uniform shape, including rectangular openings on two sides, and an opening on one side of the resin vat frame 1 is covered by the release film assembly 2 and particularly covered by the release film 21, and the release film 21 and the resin vat frame 1 form a resin vat for containing liquid resin for printing. A side wall of the resin vat frame 1 has a thickness, and the release film assembly 2 is connected and fixed to the resin vat frame 1 depending on the thickness of an edge of the opening. One end of the clipping plate 3 can be fixed to the resin vat frame 1 at a plurality of positions, and the clipping plate 3 can also be in various forms, thus the other end of the clipping plate 3 can protrude from the release film 21 at the opening on the first side of the resin vat frame 1, so that when the release film is attached to the light source screen, the clipping plate 3 protruding from the release film 21 can be nested and engaged into a boss of the printer. For ease of description, one side on which the resin vat frame 1 is connected to the release film assembly 2 is defined as down, and the other side is defined as up. Specifically, the clipping plate 3 is a flat plate structure, and is oriented in the height direction of the resin vat frame 1. An inner surface at an upper end of the clipping plate 3 is attached to an outer surface at a lower end of the resin vat frame 1, and the bottom end of the clipping plate 3 protrudes from the edge of the opening at the lower end of the resin vat frame 1 and protrudes from the release film 21. Alternatively, the release film assembly 2 is connected to an inner periphery of the edge of the bottom opening of the resin vat frame 1 along a thickness direction, and the upper end of the clipping plate 3 is fixed to an outer periphery of the edge of the bottom opening of the resin vat frame 1 along the thickness direction, that is, the clipping plate 3 is arranged around an outer periphery of an edge of the release film assembly 2, and an outer wall of the clipping plate 3 and an outer wall of the resin vat frame 1 are in the same plane. This configuration provides an overall aesthetic appearance of the resin vat. Further, The clipping plate 3 and the resin vat frame 1 can be processed into an integrated structure to ensure that the outer wall of the resin vat has no protrusion or slit, such that it is not easy to accumulate resin residues and the cleanliness of the resin vat is ensured. In addition, the clipping plate 3 is not limited to the flat plate structure, and can also be an arc-shaped plate structure with a certain curvature or a semi-circular bulge, etc., and the orientation of the clipping plate 3 is also not limited to be in the height direction of the resin vat frame 1, and the clipping plate 3 can be inclined relative to the height direction of the resin vat frame 1.

In the resin vat device for a 3D printer proposed by an embodiment of the present disclosure, in general, the clipping plate is arranged at an edge of the bottom surface of the resin vat device, and the clipping plate is nested and fitted in the boss of the printer, allowing the resin vat device to be fixed quickly and accurately, and the resin vat device is fixed not only depending on bolts, such that the position is more stable and is not prone to displacement due to vibrations during printing. In the prior art, the existing LED screen is at the same level as or slightly lower than an upper surface of a base of the printer, it is difficult to quickly and accurately place the resin vat containing the resin in place, and when fixing parts for the resin vat are aging and deform, the position of the resin vat will deviate significantly. Compared with the prior art, in this application document, by means of provision of the clipping plate protruding from the release film at the bottom surface of the resin vat, when the resin vat is placed on the boss of the printer, the release film is attached to the light source screen of the printer, and the clipping plate can be nested in an outer periphery of the boss due to protruding from the release film to achieve fast and accurate positioning of the resin vat, and due to the limit effect provided by the nesting, the resin vat has a good stability and will not be loosened due to bolt connection or engagement connection during printing.

The clipping plate 3 is configured to fit with the boss of the printer, and can have various shapes and configurations. Three specific structures are described below.

As shown in FIG. 2, the clipping plate 3 is an annular clipping plate 3 arranged along the outer periphery of the edge of the opening on the first side, or the clipping plate 3 is an annular clipping plate 3 arranged along the outer periphery of an outer side of the release film assembly 2.

The clipping plate 3 is an annular clipping plate. In a first configuration, an area of the opening of the clipping plate 3 is slightly larger than an area of the opening at the lower end of the resin vat frame 1, and the upper end of the clipping plate 3 is nested in the lower end of the resin vat frame 1, an inner wall of an upper edge of the clipping plate 3 is attached and fixed to an outer wall of an edge of the opening at the lower end of the resin vat frame 1 along the periphery, and a lower edge of the clipping plate 3 is configured to be nested in the boss of the printer. In a second configuration, the clipping plate 3 has a smaller thickness than the resin vat frame 1, and the outer periphery of the edge of a lower opening of the resin vat frame 1 along the thickness direction is connected to the upper edge of the annular clipping plate 3 along the periphery, the inner periphery of the edge of the lower opening of the resin vat frame 1 along the thickness direction is connected to an edge of the release film assembly 2, so that the annular clipping plate 3 is located at an outer periphery of the outer side of the release film assembly 2. The annular clipping plate 3 allows the clipping plate 3 to completely cover the side wall of the boss of the printer along its circumferential perimeter, and has a good limiting effect, and can prevent excess resin from leaking and accumulating on the side wall of the boss.

The clipping plate 3 is not limited to the above-mentioned annular structure, and can also be a clipping plate 3 arranged on two adjacent sides of the lower end of the resin vat frame 1. When placing the resin vat, a corner or side of the resin vat without the clipping plate is placed on the boss of the printer, and then the resin vat is pushed to cause the resin vat to slide inwards until the clipping plate 3 is engaged with the side wall of the boss, thus making it easier to place the resin vat.

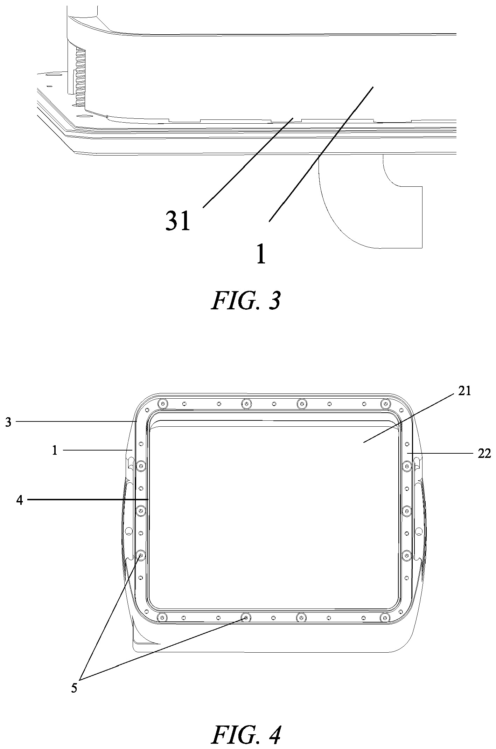

In addition, the clipping plate 3 can also be structured as follows. As shown in FIG. 3, the clipping plate 3 includes at least two sub clipping plates 31, and the at least two sub clipping plates 31 are respectively arranged in different directions of the edge of the opening on the first side, and either of the sub clipping plates 31 includes a plurality of sub-plates that are uniformly distributed.

As an example, four sub clipping plates 31 are provided, the four sub clipping plates 31 are respectively arranged in four directions at the edge of the opening on the first side, and each sub clipping plate 31 includes a plurality of uniformly distributed sub-plates, that is, a plurality of separate and independent sub-plates are uniformly distributed around the periphery of the edge of the opening at the lower end of the resin vat frame 1. Since the sub-plates are independent from each other, any one of the sub-plates can expand outward under the tension in the material, so that the opening enclosed by a plurality of sub-plates can become larger under the action of an external force. When the periphery of the boss of the printer becomes larger due to manufacturing errors or thermal expansion and contraction, the resin vat can still rely on the deformation of the sub-plates to be nested in the boss to increase the scope of application of the resin vat device.

The resin vat filled with the resin is placed on the light source screen of the printer. The release film 21 is in direct contact with the light source screen, and the curing reaction occurs on the release film 21. After curing of one layer is completed, the cured printing model is drawn upward such that it is separated from the release film 21, and then a next layer of the model continues to be printed. The degree of attachment between the release film 21 and the light source screen directly affects the printing effect. In order to ensure the release film 21 is closely attached to the light source screen, this implementation adopts the following technical solution.

As shown in FIG. 4, the release film assembly 2 includes a release film 21 and a support frame 22 laid around the periphery of the edge of the release film 21, and an annular protrusion 4 is laid around the inner periphery of the edge of the opening on the first side, the protruding height of the annular protrusion 4 is lower than the height of the clipping plate 3, the release film assembly 2 is fixed on the edge of the opening on the first side by means of the support frame 22, and the support frame 22 is embedded in a gap between the clipping plate 3 and the annular protrusion 4, and the annular protrusion 4 abuts against the release film 21.

The release film 21 is a transparent film with a certain tension. During printing and demolding, due to the thermal viscosity of the product, the release film 21 is first pulled along with the product and partially deformed to protrude by a height, and then is separated from the product due to the tension limit to return to a flat state. This process will be frequently repeated during printing the product. Repeated pulling will cause irreversible deformation of the release film 21 and cause an area of the release film 21 to increase and its tension to reduce, which affects effective demoulding of the product.

In view of this, in this embodiment, the gap between the clipping plate 3 and the annular protrusion 4 is lower than the clipping plate 3 and the annular protrusion 4, forming an annular groove. The support frame 22 includes two annular frame bodies with the same structure, the two annular frame bodies clamp the edge of the release film 21 along the periphery from both sides of the edge of the release film 21, and the support frame 22 clamps the edge of the release film 21 along the periphery and is embedded in the groove between the clipping plate 3 and the annular protrusion 4. Since the annular protrusion 4 protrudes from the bottom surface of the groove, the periphery of the release film 21 close to the support frame 22 is pressed down by the annular protrusion 4, the release film 21 is tensioned due to its sufficient extension, and a plane in which the release film 21 is located is at the bottom of the release film assembly 2 to ensure effective attachment between the release film 21 and the light source plane.

The degree of extension of the release film 21 is enhanced with the degree at which the support frame 22 is embedded in the groove, so that the degree of extension of the release film 21 can be adjusted by adjusting the position of the support frame 22 to ensure that the release film 21 has an enough tension.

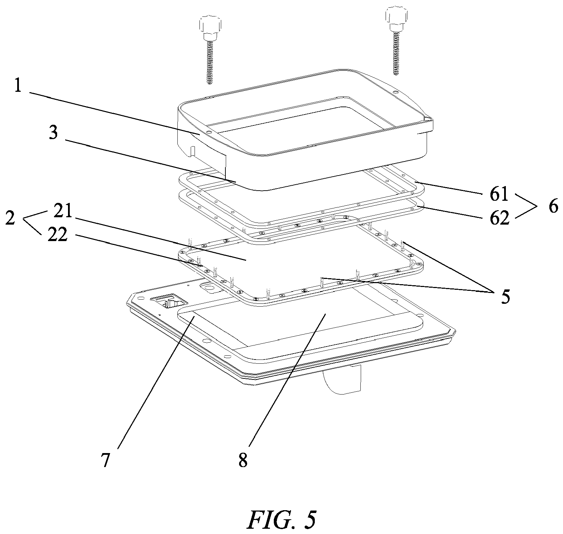

Specifically, as shown in FIGS. 1 and 5, the support frame 22 is connected to the edge of the opening on the first side by means of a plurality of locking bolts 5, and an elastic washer 6 is further provided between the support frame 22 and the edge of the opening on the first side, the elastic washer 6 is configured to deform under the locking actions of the plurality of locking bolts 5, so that the support frame 22 gets closer to the edge of the opening on the first side and then the release film 21 is tensioned. Further, the elastic washer 6 includes a cotton washer 61 and a steel ring 62, and the cotton washer 61, the steel ring 62 and the support frame 22 are stacked in sequence.

When the release film 21 deforms to cause the tension to be reduced and cannot be demolded in time, the locking bolts 5 are rotated in sequence, and the elastic washer 6 is compressed to increase the depth at which the support frame 22 clamps the edge of the release film 21 along the periphery and is embedded in the groove to cause the release film 21 to extend outward, so as to achieve a purpose of increasing the tension of the release film 21. The steel ring 62 can also be a rubber ring, and the cotton washer 61 can specifically be made of EVA cotton.

Further, the support frame 22 is provided with bolt marks for indicating the number or installation sequence of the plurality of locking bolts 5.

Specifically, there is 16 locking bolts 5, and 16 corresponding screw holes on the support frame 22 and the resin vat frame 1 are also provided. Since the support frame 22 covers the resin vat frame 1 during installation, the bolt marks are arranged next to each screw hole on the support frame 22. Specifically, on the four sides of the support frame 22, each side is provided with four screw holes separated by a distance, and the 16 screw holes are arranged in such a way that the screw holes are dense at each corner and sparse on straight sides in the circumferential direction, the bolt marks are number marks, which are marked as follows in a clockwise order: ⑩①②⑪ on a first side, ⑫③④⑬ on a second side, ⑭⑤⑥⑮ on a third side, ⑯⑦⑧⑨ on a fourth side. When installing the locking bolts 5, the locking bolts 5 are installed one by one in the order of the numbers marked. For example, the bolts corresponding to the screw holes marked with ①② on the first side are installed first, and then the bolts corresponding to the screw holes marked with ③④ on second first side are installed, and so on until the bolt corresponding to the screw holes marked with ⑯ on the fourth side is installed finally. This staggered installation method of fixing each side first and then fixing each corner can cause the release film 21 to evenly extend, and avoid excessive embedding of any side of the support frame 22 into the groove between the clipping plate 3 and the annular protrusion 4 during the installation which otherwise causes the release film 21 to be damaged.

An overall description of the structure of a specific embodiment of the present disclosure is made below:

a resin vat device for a 3D printer, including: a resin vat frame 1, a release film assembly 2 and a clipping plate 3.

The release film assembly 2 includes a release film 21 and a support frame 22 laid around the periphery of an edge of the release film 21, the release film assembly 2 covers an opening on a first side of the resin vat frame 1, and the clipping plate 3 is an annular clipping plate 3 arranged along an outer periphery of an outer side of the release film assembly 2, one end of the clipping plate 3 is fixed to an outer periphery of an edge of the opening on the first side of the resin vat frame 1, and the other end thereof is located at the opening on the first side and protrudes from the release film 21, an annular protrusion 4 is laid around an inner periphery of the edge of the opening on the first side of the resin vat frame 1, the support frame 22 is embedded in a gap between the clipping plate 3 and the annular protrusion 4, and the annular protrusion 4 abuts against the release film 21.

A cotton washer 61 and a steel ring 62 located below the cotton washer are stacked between the support frame 22 and the edge of the opening on the first side, and bolt marks are provided on the support frame 22.

According to another aspect, an embodiment of the present disclosure further provides a 3D printer, including the resin vat device of any one of the foregoing embodiments, and has the advantages of the resin vat device of any one of the foregoing embodiments, which will not be repeated herein.

As shown in FIG. 5, a base of the 3D printer is provided with a boss 7 for placing the resin vat device thereon, and the clipping plate 3 is configured to be nested in an outer periphery of the boss 7 when the resin vat device is placed on the boss 7. The boss 7 may have a height of 1 - 3 mm, the boss 7 includes a light source screen 8, the light source screen 8 is located in the middle of the boss 7, and the area of the boss 7 is larger than that of the light source screen 8, an upper surface of the light source screen 8 is higher than an upper surface of the boss 7, specifically by 0.1 mm. The light source screen 8 higher than the boss 7 can be better attached to a lower surface of the release film 21 to ensure the printing quality.

The above descriptions are merely particular embodiments of the present disclosure, but the scope of protection of the present disclosure is not limited thereto. Any changes or substitutions that can be readily conceived by those skilled in the art within the technical scope disclosed by the present disclosure shall fall within the scope of protection of the present disclosure. Therefore, the scope of protection of the present disclosure should be determined by the scope of protection of the claims.

## Claims

1. A resin vat device for a 3D printer, comprising:
a resin vat frame (1) and a release film assembly (2), the release liner assembly (2) comprising a release liner (21); wherein
the release film assembly (2) covers an opening on a first side of the resin vat frame (1), the resin vat device further comprises a clipping plate (3), one end of the clipping plate (3) is fixed, and the other end thereof is located at the opening on the first side and protrudes from the release film (21).

2. The resin vat device for a 3D printer according to claim 1, wherein
the resin vat frame (1) is a rectangular barrel frame with a preset height and an axial opening of uniform shape, the release film (21) covers the opening on the first side of the resin vat frame (1), and the release film (21) and the resin vat frame (1) form a resin vat for containing liquid resin for printing.

3. The resin vat device for a 3D printer according to claim 1, wherein a side wall of the resin vat frame (1) has a preset thickness; and
the release liner assembly (2) is connected and fixed to the resin vat frame (1) depending on the edge of the opening on the first side.

4. The resin vat device for a 3D printer according to claim 1, wherein
the clipping plate (3) is oriented in a height direction of the resin vat frame (1);
or the clipping plate (3) is oriented to be inclined relative to the height direction of the resin vat frame (1).

5. The resin vat device for a 3D printer according to claim 1, wherein
the clipping plate (3) is an annular clipping plate (3) arranged along an outer periphery of the edge of the opening on the first side;
or the clipping plate (3) is an annular clipping plate (3) arranged along an outer periphery of an outer side of the release film assembly (2);
or the clipping plate (3) is laid on a lower end of the resin vat frame (1) on two adjacent sides.

6. The resin vat device for a 3D printer according to claim 5, wherein
the annular clipping plate (3) has a smaller thickness than the resin vat frame (1); and
the outer periphery of the edge of a lower opening of the resin vat frame (1) along the thickness direction is connected to an upper edge of the annular clipping plate (3) along the periphery, and the inner periphery of the edge of the lower opening of the resin vat frame (1) along the thickness direction is connected to an edge of the release film assembly (2), so that the annular clipping plate (3) is arranged at the outer periphery of the outer side of the release film assembly (2).

7. The resin vat device for a 3D printer according to claim 1, wherein an outer wall of the clipping plate (3) is in the same plane as an outer wall of the resin vat frame (1).

8. The resin vat device for a 3D printer according to claim 1, wherein
the clipping plate (3) comprises at least two sub clipping plates (31), and the at least two sub clipping plates (31) are respectively arranged in different directions of the edge of the opening on the first side, and either of the sub clipping plates (31) comprises a plurality of sub-plates that are uniformly distributed.

9. The resin vat device for a 3D printer according to claim 8, wherein
a plurality of separate and independent sub-plates are uniformly distributed around the periphery of the edge of the opening at the lower end of the resin vat frame (1), such that when the sub-plates deform duet to an external force, the resin vat frame (1) is nested into the boss of the printer according to the deformation.

10. The resin vat device for a 3D printer according to any one of claims 1 to 9, wherein
the release film assembly (2) further comprises a support frame (22) arranged around the periphery of the edge of the release film (21), and an annular protrusion (4) is laid around the inner periphery of the edge of the opening on the first side, the protruding height of the annular protrusion (4) is lower than the height of the clipping plate (3), the release film assembly (2) is fixed on the edge of the opening on the first side by means of the support frame (22), and the support frame (22) is embedded in a gap between the clipping plate (3) and the annular protrusion (4), the annular protrusion (4) abuts against the release film (21), and the plane in which release film (21) is located is at the bottom of the release film assembly (2).

11. The resin vat device for a 3D printer according to claim 10, wherein
the support frame (22) is connected to the edge of the opening on the first side by means of a plurality of locking bolts (5), and an elastic washer (6) is further provided between the support frame (22) and the edge of the opening on the first side, the elastic washer (6) is configured to deform under the locking actions of the plurality of locking bolts (5), so that the support frame (22) gets closer to the edge of the opening on the first side and then the release film (21) is tensioned.

12. The resin vat device for a 3D printer according to claim 11, wherein
the support frame (22) is provided with bolt marks for indicating the number or installation sequence of the plurality of locking bolts (5).

13. The resin vat device for a 3D printer according to claim 11, wherein
the elastic washer (6) comprises a cotton washer (61) and a steel ring (62), and the cotton washer (61), the steel ring (62) and the support frame (22) are stacked in sequence.

14. A 3D printer, comprising a resin vat device of any one of claims 1-7.

15. The 3D printer according to claim 14, wherein
a base of the 3D printer is provided with a boss (7) for placing the resin vat device thereon, and the clipping plate (3) is configured to be nested in an outer periphery of the boss (7) when the resin vat device is placed on the boss (7).

16. The 3D printer according to claim 15, wherein
a light source screen (8) is arranged on the boss (7), and an upper surface of the light source screen (8) is higher than an upper surface of the boss (7).
